# EUROPEAN PATENT APPLICATION

(11) **EP 1 665 942 A1**
(43) Date of publication of application: **07.06.2006**
(21) Application number: 05076252.5
(22) Date of filing: 27.05.2005
(51) Int. Cl.: A23N 1/00, A23N 1/02, C11B 1/00

(54) **System for the extraction of the liquid component from drupes mounted on the falt bed of a trailer vehicle**

(30) Priority: 03.12.2004 IT RE20040148
(71) Applicant: Ing. Bonfiglioli S.p.A., 40050 Castello d'Argile (Bologna) (IT)
(72) Inventor: Bonfiglioli, Giancarlo Ing. Bonfiglioli S.p.A., 4050 Castello d'Argile (Bologna) (IT)
(74) Representative: Corradini, Corrado

(57) **Abstract**

System (1) for the extraction of the liquid component from drupes mounted on a flat bed (100) equipped with an axle mounted with wheels (120), said system (1) comprising a press (2) adapted to crush the drupes to extract a paste; at least one kneader (3) to homogenise the paste from the press (2); a decanter (4) for the extraction of the liquid component from the homogenised paste from the kneader (3), a centrifugal separator (5) and an olive washing machine (8) characterised in that it comprises at least one transportable water tank (11) housed under and associated with said flat bed (100).

## Description

The present invention refers to an improved system for the extraction of the liquid component from drupes suitable for being completely mounted on a trailer that can be attached to a motor vehicle in accordance with the preamble in claim 1.

Installations such as oil mills for the production of olive oil through olive crushing are already known to the art.

Today, the production of olive oil from olives is performed using continuous type installations, wherein the olives are first pitted to obtain a paste.

After this operation the paste is pushed into a kneader and from there into a horizontal centrifuge known as a decanter, which extracts the oil from the olive paste.

Lastly the liquid component on exit from the decanter and known as oily must is sent to a vertical centrifuge to separate the oil and water.

The use of an installation that can be mounted on the flat bed of a trailer as described in the application for patent RE2004A000014 by the same Applicant in order to reduce system size while maintaining the high productive capacity typical of fixed installations provides undeniable advantages.

However, since the processing method requires large amounts of water in order to function correctly, said advantages can be reduced considerably when operating on sites without easy access to a water supply.

It is therefore essential to provide a system for the extraction of the liquid component from drupes mounted on the flat bed of a trailer that permits easy transport of the water required for the process without the need for connection to a water supply source "on site", and that said transport system does not compromise the functionality and compact nature of the whole system.

The aim of the present invention is to provide an improved system for the extraction of the liquid component from drupes, mounted on the flat bed of a trailer having the structural and functional characteristics able to satisfy the aforesaid necessities, while eliminating the problems described in reference to known technical state of the art.

This aim is achieved by means of a system for the extraction of the liquid component from drupes mounted on the flat bed of a trailer in accordance with claim 1.

The subordinate claims describe preferred and particularly advantageous embodiments of the system according to the invention.

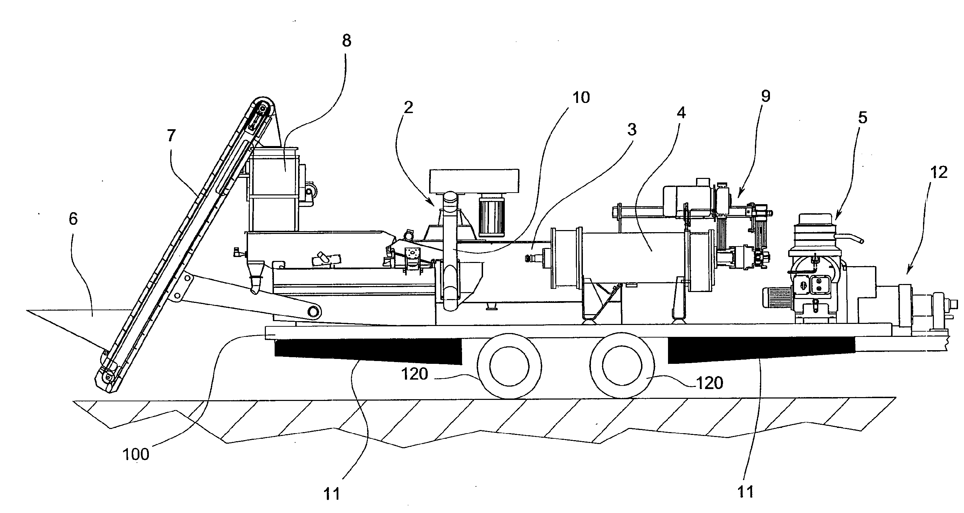

Further characteristics and advantages of the invention will be made clear in the following description provided as an example but not to be considered limiting in any way, with reference to the appended drawing that shows a side view of a system for the extraction of the liquid component from drupes mounted on the flat bed of a trailer according to the present invention.

With reference to the aforesaid figure, the system for the extraction of the liquid component from drupes is identified throughout by the numeral 1, said system being mounted on a flat bed 100, equipped with an axle mounted with wheels 120, according to the present invention.

To define the system very briefly, the system 1 for olive oil production mounted on a flat bed 100 comprises an olive press 2, at least one kneader 3, a decanter 4, and a centrifugal separator 5 (simply called centrifuge) as shown schematically in the figure.

Operatively, once the olives have been harvested, defoliated and cleaned of twigs, they are fed into a delivery hopper 6, from which exits a first conveyor system, for example an elevator 7 with a conveyor belt, preferably made from antacid rubber.

In the illustrated example, the elevator 7 with conveyor belt can be moved from the working position, as shown in the figure, to a transport position, not illustrated, said change from one position to the other being possible by fixing the elevator 7 on a hinged device at the rear end of the flat bed 100.

In practice the elevator 7 is completely raised from the ground during transportation.

The elevator 7 conveys the olives from the hopper 6 to a washing device, preferably a hydropneumatic system, wherein the olives are subject to delicate washing action, generally at ambient temperature.

Naturally the washing process is not absolutely necessary but it contributes towards improving the quality of the olives and therefore also of the oil.

After the washing operation in the washer 8, the washed olives are transferred to the olive press 2 by a suitable conveyor means 10.

Under the olive press 2 are located the kneaders 3 into which the crushed product from the press is poured.

Each kneader 3 comprises a homogenising tank, generally made of stainless steel, equipped with rotating kneading blades having a suitable form, and motor driven to create a delicate mixing action to prevent the forming of deposit layers on the walls of the tank.

Each kneader is constructed with a cavity wall filled with water having a large exchange surface to prevent local overheating.

The paste is sent from the kneaders 3 to the decanter 4 by means of a pump, generally a variable speed single screw type.

The decanter 4 is a horizontal axis centrifugal separator, which separates the three components present in the paste: oil, water and pulp, which are divided by the centrifugal force because of the difference in their specific weights.

Practically speaking, the decanter 4 is a machine with a motor 9 driven endless Archimedean screw.

Said decanter can be configured with two or three outlets and the addition of water is foreseen during decanter action.

The liquid component or oily must is pumped as it is discharged to the centrifuge separator 5.

According to the present invention, the water required to supply a possible washing machine 8, the kneaders 3, and the decanter 4 is taken from the water tanks 11 suitably configured and housed under the flat bed 100.

The water is distributed by known technical means such as a pump 12.

In example 1, the tanks 11 are two in number and are housed respectively on each side of the axle of the flat bed 100.

This ensures greater stability for flat bed balance during transport.

The two tanks 11 can be independent or connected to each other by means of a connection hose.

To prevent the tanks 11 located under the flat bed 100 from hindering vehicle manoeuvring on bumpy roads, the two tanks 11 are configured with an increasingly tapered form at the opposite ends of the flat bed 100.

In particular, the tanks 11 are tapered in the direction from the flat bed axle towards the opposite ends in the direction of vehicle travel.

As can be clearly understood from the aforesaid description, the present invention is able to satisfy the needs and overcome the problems described in the introductory part of the present description in reference to known technical state of the art.

In fact, the presence and the particular housing of said tanks ensures that the water necessary for running the installation, is always available.

Furthermore, said tanks can be easily transported without creating a hindrance and without preventing the normal use of the trailer.

Naturally a technician skilled in the art will be able to apply numerous modifications and variants to the aforesaid system in order to satisfy specific and additional needs, while remaining within the context of the protection of the present invention as defined in the following claims.

## Claims

1. System (1) for the extraction of the liquid component from drupes mounted on a flat bed (100) equipped with an axle mounted with wheels (120), said system (1) comprising a press (2) adapted to crush the drupes to extract a paste; at least one kneader (3) to homogenise the paste from the press (2); a decanter (4) for the extraction of the liquid component from the homogenised paste from the kneader (3), a centrifugal separator (5) and an olive washing machine (8) **characterised in that** it comprises at least one transportable water tank (11) housed under and associated with said flat bed (100).

2. System (1) according to claim 1 wherein said tank (11) presents a configuration that tapers in a direction from the axle of the flat bed (100) in the direction of the vehicle travel.

3. System (1) according to claim 1 **characterised in that** it comprises two water tanks (11) located respectively in front of and behind the flat bed axle (100)
